(19) Europäisches Patentamt
European Patent Office
Office européen des brevets

(11) **EP 4 322 084 A1**

(12) **EUROPEAN PATENT APPLICATION**

(43) Date of publication:
**14.02.2024 Bulletin 2024/07**

(51) International Patent Classification (IPC):
***G06Q 10/0631*** (2023.01)    ***G06Q 50/06*** (2024.01)

(21) Application number: **22207311.6**

(52) Cooperative Patent Classification (CPC):
**G06Q 10/06315; G06Q 50/06; Y04S 10/50**

(22) Date of filing: **14.11.2022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210964974**

(71) Applicant: **China Three Gorges Co., Ltd.
Wuhan Hubei 430010 (CN)**

(72) Inventor: **ZHANG, Ziliang
Wuhan, 430010 (CN)**

(74) Representative: **Lavoix
Bayerstraße 83
80335 München (DE)**

(54) **METHOD AND DEVICE FOR SELECTING WIND RESOURCE ASSESSMENT TOOL AND ELECTRONIC DEVICE**

(57)    The present invention discloses a method and device for selecting a wind resource assessment tool and an electronic device. The method comprises: acquiring at least one wind resource assessment tool; determining at least one influencing factor corresponding to each of the wind resource assessment tools, wherein the influencing factor reflects an influence on competitiveness of the wind resource assessment tool; determining a competitiveness score of each of the wind resource assessment tools according to the at least one influencing factor of each wind resource assessment tool, determining a target wind resource assessment tool from the at least one wind resource assessment tool according to each of the competitiveness scores, wherein the competitiveness score of the target wind resource assessment tool is the highest among all the competitiveness scores. The corresponding competitiveness score is determined according to influencing factors of the wind resource assessment tool, and an optimal tool for assessing the wind resource is determined among a plurality of selectable assessment tools according to the competitiveness score, thereby making clear a multi-objective decision-making process, and effectively improving rationality in selecting the wind resource assessment tool.

FIG. 1

## Description

**Technical Field**

The present invention relates to the technical field of wind resources, in particular to a method and device for selecting a wind resource assessment tool and an electronic device.

**Background Art**

Wind resource assessment is an important part of a pre-planning stage of wind farms, and an accurate assessment of wind resource can effectively reduce investment risks and improve an income level of wind farms. Various wind resource assessment tools exist in engineering, such as WAsP, Windsim, Meteodyn WT, Fluent-RANS, Fluent-LES, etc. The applicable conditions of each assessment tool are not the same, and the cost and accuracy of assessment also differ significantly. For specific wind farm projects, a suitable wind resource assessment tool can be selected to effectively optimize the wind resource assessment process of wind farms, and is of great significance to assessment planning of wind farms.

Various factors need to be considered in the selection of wind resource assessment tools, such as time calculation, cost calculation, and accuracy assessment, and the selection is a multi-objective decision-making process. However, factors need to be considered comprehensively in the multi-objective decision-making process and the specific selection process are not clear. Therefore, a new reasonable tool selection method needs to be urgently proposed.

**Summary of the Invention**

In view of this, embodiments of the present invention provide a method and device for selecting a wind resource assessment tool and an electronic device, to solve the technical problem in the prior art that factors need to be considered comprehensively in the multi-objective decision-making process and the specific selection process are not clear.

Technical solutions proposed in the present invention are as follows:

In a first aspect, embodiments of the present invention provide a method for selecting a wind resource assessment tool, wherein the method for selecting a wind resource assessment tool includes: acquiring at least one wind resource assessment tool; determining at least one influencing factor corresponding to each of the wind resource assessment tools, wherein the influencing factor reflects an influence on competitiveness of the wind resource assessment tool; determining a competitiveness score of each of the wind resource assessment tools according to the at least one influencing factor of each wind resource assessment tool; and determining a target wind resource assessment tool from the at least one wind resource assessment tool according to each of the competitiveness scores, wherein the competitiveness score of the target wind resource assessment tool is the highest among all the competitiveness scores.

Optionally, in a possible implementation of a first aspect, the step of acquiring at least one wind resource assessment tool includes: acquiring a wind resource project to be assessed of a target wind farm; and acquiring at least one wind resource assessment tool according to the wind resource project to be assessed of the target wind farm.

Optionally, in another possible implementation of a first aspect, each influencing factor includes a plurality of influencing sub-factors; the step of determining a competitiveness score of each of the wind resource assessment tools according to the at least one influencing factor of each wind resource assessment tool includes:

determining a first importance score of each of the wind resource assessment tools relative to each influencing sub-factor, a second importance score of each influencing sub-factor relative to each of the influencing factors, and a third importance score of each of the influencing factors relative to a target wind resource assessment tool, respectively, according to predetermined importance judgment standards; constructing a plurality of corresponding comparison matrices according to a plurality of the first importance scores, a plurality of the second importance scores, and a plurality of the third importance scores, respectively, with the matrix element in each comparison matrix being composed of corresponding importance scores; verifying each comparison matrix according to predetermined verification conditions; when the verification is passed, calculating respectively a first weight value of each of the wind resource assessment tools relative to each of the influencing sub-factors, a second weight value of each of the influencing sub-factors relative to each of the influencing factors, and a third weight value of each of the influencing factors relative to the target wind resource assessment tool; constructing a first weight matrix according to each of the second weight values and each of the third weight values, wherein each matrix element in the first weight matrix is composed of each of the second weight values and each of the third weight values; constructing a second weight matrix according to each of the first weight values, wherein each matrix element in the second weight matrix is composed of each of the first weight values; determining a result matrix according to the first weight matrix and the second weight matrix; determining a competitiveness score of each of the wind resource assessment tools according to the result matrix, wherein each matrix element in the result matrix reflects the competitiveness score of each of the wind resource assessment tools.

Optionally, in still another possible implementation of a first aspect, the step of constructing a plurality of corresponding comparison matrices according to a plurality of the first importance scores, a plurality of the second importance scores, and a plurality of the third importance scores, respectively, with the matrix elements in each comparison matrix being composed of corresponding importance scores includes: constructing a plurality of first comparison matrices according to a plurality of the first importance scores, wherein the first importance scores characterize matrix elements in the first comparison matrix; constructing a plurality of second comparison matrices according to a plurality of the second importance scores, wherein the second importance scores characterize the matrix elements in the second comparison matrix; and constructing a plurality of third comparison matrices according to a plurality of the third importance scores, wherein the third importance scores characterize the matrix elements in the third comparison matrix.

Optionally, in still another possible implementation of a first aspect, the step of verifying each comparison matrix according to predetermined verification conditions includes: acquiring a matrix order of each comparison matrix; comparing the matrix order with a first threshold value; and determining that the corresponding comparison matrix passes the verification if the matrix order is less than or equal to the first threshold value.

Optionally, in still another possible implementation of a first aspect, the step of verifying each comparison matrix according to predetermined verification conditions further includes: acquiring a random consistency indicator value corresponding to the comparison matrix from a predetermined data table according to the matrix order if the matrix order is greater than the first threshold value; calculating a maximum eigenvalue of the comparison matrix and calculating a consistency ratio value corresponding to the comparison matrix according to the maximum eigenvalue and the random consistency indicator value; comparing the consistency ratio value with a second threshold value; and determining that the comparison matrix passes the verification if the consistency ratio value is less than the second threshold value.

Optionally, in still another possible implementation of a first aspect, the step of verifying each comparison matrix according to predetermined verification conditions further includes: determining that the comparison matrix does not pass the verification if the consistency ratio value is greater than or equal to the second threshold value; adjusting the comparison matrix that does not pass the verification according to the predetermined importance judgment standards, and repeating from the step of acquiring a matrix order of each comparison matrix to the step of adjusting the comparison matrix that does not pass the verification according to the predetermined importance judgment standards until each of the comparison matrices passes the verification.

Optionally, in still another possible implementation of a first aspect, after determining a target wind resource assessment tool from the at least one wind resource assessment tool according to each of the competitiveness scores, the method further includes: using the target wind resource assessment tool to assess the wind resource project to be assessed of the target wind farm, to obtain wind resource situations of the target wind farm.

In a second aspect, embodiments of the present invention provide a device for selecting a wind resource assessment tool, and the device for selecting a wind resource assessment tool includes: an acquisition module, configured to acquire at least one wind resource assessment tool; a first determination module, configured to determine at least one influencing factor corresponding to each of the wind resource assessment tools, wherein the influencing factor reflects an influence on competitiveness of the wind resource assessment tool; a second determination module, configured to determine a competitiveness score of each of the wind resource assessment tools according to the at least one influencing factor of each wind resource assessment tool, and a third determination module, configured to determine a target wind resource assessment tool among at least one wind resource assessment tool according to each of the competitiveness scores, wherein the competitiveness score of the target wind resource assessment tool is the highest among all the competitiveness scores.

In a third aspect, embodiments of the present invention provide a computer readable storage medium, wherein the computer readable storage medium stores computer instructions, and the computer instructions are configured to enable the computer to perform a method for selecting a wind resource assessment tool described in the first aspect and any item of the first aspect of the embodiments of the present invention.

In a fourth aspect, embodiments of the present invention provide an electronic device, including: a memory and a processor, wherein the memory and the processor are in communication connection with each other, the memory stores computer instructions, and the processor executes the method for selecting a wind resource assessment tool described in the first aspect and any item of the first aspect of embodiments of the present invention by executing the computer instructions.

The technical solutions provided in the present invention have the following effects:

Through the method for selecting a wind resource assessment tool provided by embodiments of the present invention, the competitiveness scores of the corresponding assessment tool are determined according to influencing factors of the wind resource assessment tool, and the optimal tool for assessing the wind resource is determined among a plurality of selectable assessment tools according to the competitiveness scores, thereby making clear the multi-objective decision-making process, and effectively improving the rationality in selecting the wind resource assessment tool.

**Brief Description of the Drawings**

In order to more clearly explain specific embodiments of the present invention or technical solutions of the prior art, the drawings which need to be used in the description of the specific embodiments or the prior art will be briefly introduced below. Apparently, the drawings described below are some implementations of the present invention, and other drawings may be further obtained according to these accompanying drawings without any creative effort by those skilled in the art.

Fig. 1 is a flow chart of a method for selecting a wind resource assessment tool according to embodiments of the present invention;

Fig. 2 is a schematic diagram of a multi-objective decision-making system provided according to embodiments of the present invention;

Fig. 3 is another schematic diagram of a multi-objective decision-making system provided according to embodiments of the present invention;

Fig. 4 is a structure diagram of a device for selecting a wind resource assessment tool according to embodiments of the present invention;

Fig. 5 is a structural schematic diagram of a computer readable storage medium provided according to embodiments of the present invention; and

Fig. 6 is a structural schematic diagram of an electronic device provided according to embodiments of the present invention.

Detailed Description of the Embodiments

In order to make the objective, technical solutions and advantages of the embodiments of the present invention clearer, the technical solutions in the embodiments of the present invention will be described clearly and completely below in combination with accompanying drawings in the embodiments of the present invention, and apparently, the embodiments described are a part but not all of the embodiments of the present invention. Based on the embodiments in the present invention, all the other embodiments obtained by those skilled in the art without any creative effort shall all fall within the protection scope of the present invention.

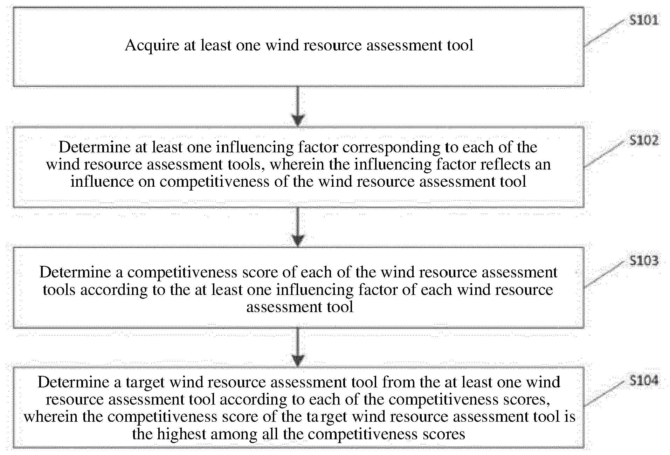

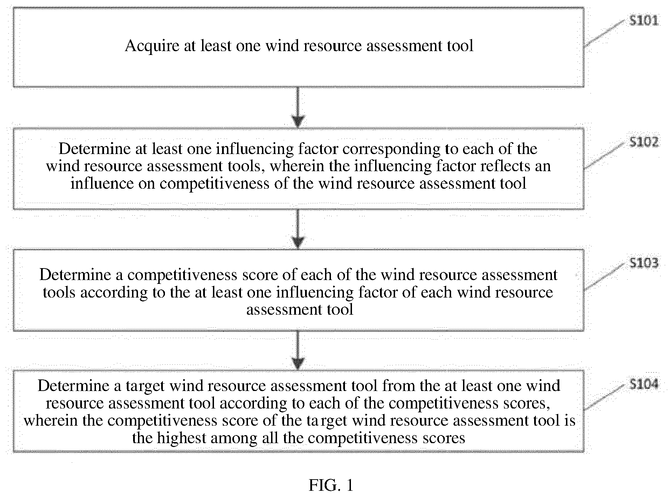

Embodiments of the present invention provide a method for selecting a wind resource assessment tool, as shown in Fig. 1, the method includes the following steps:

Step S101: acquiring at least one wind resource assessment tool.

Specifically, the wind resource assessment tools can include WAsP, Windsim, Meteodyn WT, Fluent-RANS, Fluent-LES, etc., which is not specifically limited in the embodiment of the present invention, and the selection can be made according to actual needs. Wherein, WAsP is a PC platform application tool for wind weather forecasting, generator and wind farm capacity forecasting, and can be used for statistical analysis of raw wind measurement data, and generating wind energy resource analysis maps, etc.; Windsim is based on a CFD technology, and integrates advanced numerical calculation process and realistic 3D visualization effect through a friendly interface, and can be used for wind resource calculation, air blower layout and power generation calculation, etc.; Meteodyn WT can load wind flow data of multiple anemometer towers and different heights of each anemometer tower and carry out comprehensive calculation, such that airflow characteristics and energy distribution map clearly present in virtual reality environment; Fluent-RANS is a turbulent combustion model built with a Reynolds mean equation, which allows for direct numerical simulation of turbulence; and Fluent-LES is a large eddy simulation model, which can be used to numerically simulate wind farms at atmospheric boundaries of different landform categories, and can balance calculation accuracy and calculation efficiency.

Step S102: determining at least one influencing factor corresponding to each of the wind resource assessment tools, wherein the influencing factor reflects an influence on competitiveness of the wind resource assessment tool.

Specifically, the competitiveness of a wind resource assessment tool mainly consists of two aspects: technology and cost, i.e., two influencing factors corresponding to each wind resource assessment tool. Among them, technology is positively correlated with competitiveness: the higher the technology level, the stronger the competitiveness of the corresponding wind resource assessment tool; and cost is negatively correlated with competitiveness: the higher the cost, the weaker the competitiveness of the corresponding wind resource assessment tool.

Step S103: determining a competitiveness score of each of the wind resource assessment tools according to the at least one influencing factor of each wind resource assessment tool.

Specifically, the influencing factors reflect the influence on the competitiveness of the wind resource assessment tool, therefore, the corresponding competitiveness score can be determined according to influencing factors of the wind resource assessment tool.

Step S104: determining a target wind resource assessment tool from the at least one wind resource assessment tool according to each of the competitiveness scores, wherein the competitiveness score of the target wind resource assessment tool is the highest among all the competitiveness scores.

Specifically, the competitiveness score characterizes the assessment capability of the wind resource assessment tool, and the higher the competitiveness score, the stronger the assessment capability of the corresponding wind resource assessment tool.

Through the method for selecting a wind resource assessment tool provided in the embodiments of the present invention, the competitiveness score of the corresponding assessment tool is determined according to the influencing factors of the wind resource assessment tool and the optimal tool for assessing the wind resource is determined among the multiple selectable assessment tools according to the competitiveness score, thereby making clear the multi-objective decision-making process, and effectively improving the rationality in selecting the wind resource assessment tool.

As an optional implementation of an embodiment of the present invention, step S101 includes: acquiring a wind resource project to be assessed of a target wind farm; and acquiring at least one wind resource assessment tool according to the wind resource project to be assessed of the target wind farm.

Specifically, the corresponding at least one optional wind resource assessment tool is determined according to actual situations of the wind farm project, which improves the rationality in selecting the wind resource assessment tool while taking into account the project requirements.

As an optional implementation of the embodiment of the present invention, step S103 includes: determining a first importance score of each of the wind resource assessment tools relative to each influencing sub-factor, a second importance score of each influencing sub-factor relative to each of the influencing factors, and a third importance score of each of the influencing factors relative to a target wind resource assessment tool, respectively, according to predetermined importance judgment standards; constructing a plurality of corresponding comparison matrices according to a plurality of the first importance scores, a plurality of the second importance scores, and a plurality of the third importance scores, respectively, with the matrix elements in each comparison matrix being composed of corresponding importance scores; and verifying each comparison matrix according to predetermined verification conditions;

specifically, each influencing factor includes a plurality of influencing sub-factors. For example, the influencing factor "technology" may include a plurality of influencing sub-factors such as a fluid-mechanics model, an air blower wake flow calculating method, mesh division quality, 3D terrain mesh adaptability, boundary condition processing quality, unsteady state processing level, turbulence processing level, atmospheric stability processing level, etc.; and the influencing factor "cost" may include several influencing sub-factors such as procurement cost, learning cost, modeling cost, calculation cost, post-processing cost, etc.

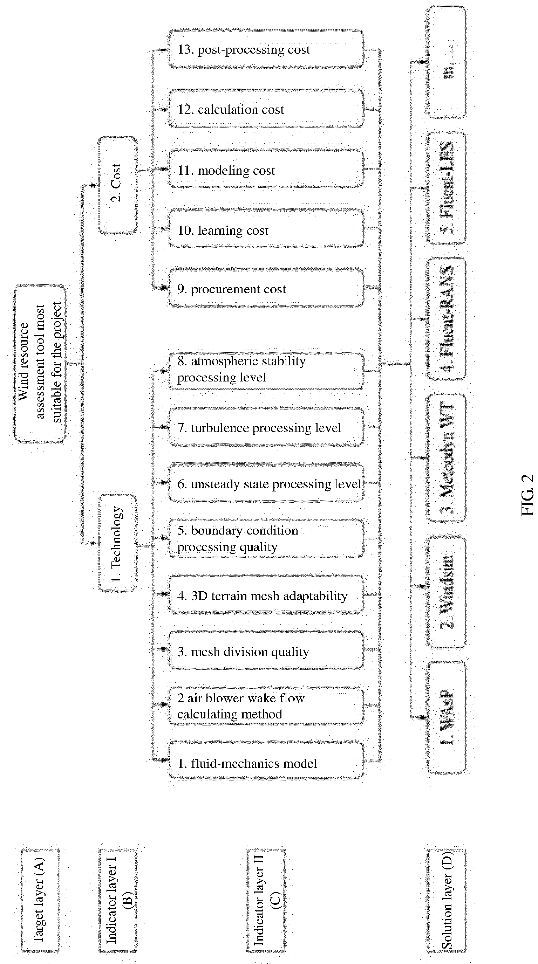

To consider the above-mentioned plurality of influencing factors and the corresponding plurality of influencing sub-factors in the process of determining the target wind resource assessment tool, a multi-objective decision-making system established according to the plurality of influencing factors and the corresponding plurality of influencing sub-factors includes a target layer, an index layer I, an index layer II, and a solution layer IV in a total of four levels. Specifically, the target layer includes a target wind resource assessment tool; the index layer I includes a plurality of influencing factors; the index layer II includes a plurality of influencing sub-factors; and the solution layer includes at least one of the acquired wind resource assessment tools, as shown in Fig. 2.

According to the project situation of the wind farm and subject to the layer of elements above each layer of elements in the multi-objective decision-making system, the first importance score of each wind resource assessment tool relative to each influencing sub-factor, the second importance score of each influencing sub-factor relative to each influencing factor, and the third importance score of each influencing factor relative to the target wind resource assessment tool are obtained through pairwise comparison according to the judgment standards described in Table 1 below. Different comparison matrices are constructed according to a plurality of obtained different importance scores.

Specifically, the following steps are included: constructing a plurality of first comparison matrices according to a plurality of first importance scores, wherein the first importance scores characterize matrix elements in the first comparison matrix; constructing a plurality of second comparison matrices according to a plurality of second importance scores, wherein the second importance scores characterize matrix elements in the second comparison matrix; and constructing a plurality of third comparison matrices according to a plurality of third importance scores, wherein the third importance scores characterize matrix elements in the third comparison matrix.

Table 1 Table of Meanings of Comparison Values

| Comparison Values | Meanings |
| --- | --- |
| 1 | Represent that the two elements have the same importance when two elements are compared |
| 3 | Represent that the former is slightly important than the latter when two elements are compared |

(continued)

| Comparison Values | Meanings |
|---|---|
| 5 | Represent that the former is obviously important than the latter when two elements are compared |
| 7 | Represent that the former is strongly more important than the latter when two elements are compared |
| 9 | Represent that the former is extremely more important than the latter when two elements are compared |

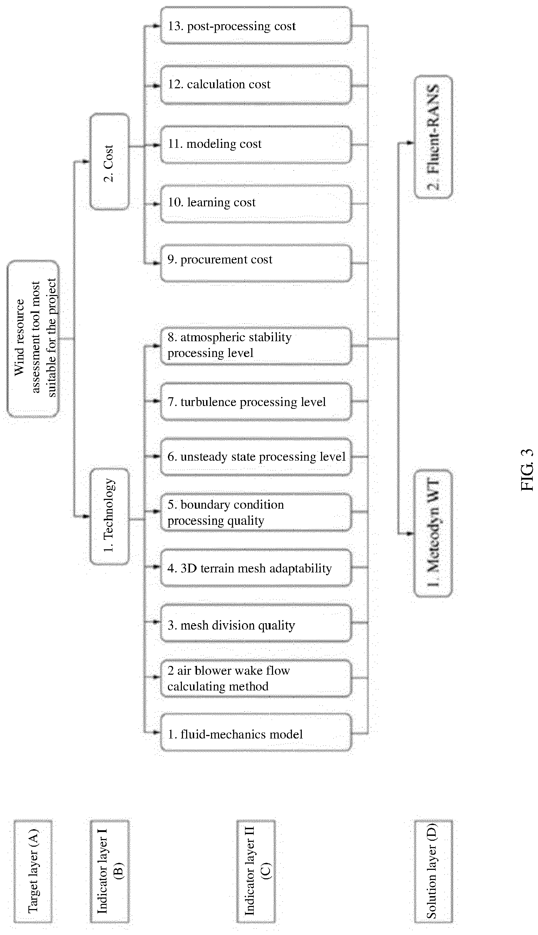

In one embodiment, the multi-objective decision-making system is shown in Fig. 3, and after comparison according to Table 1, sixteen comparison matrices in total are constructed respectively for elements B1, B2 relative to A, C1-C8 relative to B1, C9-C13 relative to B2, D1-D2 relative to C1, D1-D2 relative to C2, D1-D2 relative to C3, D1-D2 relative to C4, D1-D2 relative to C5, D1-D2 relative to C6, D1-D2 relative to C7, D1-D2 relative to C8, D1-D2 relative to C9, D1-D2 relative to C10, D1-D2 relative to C11, D1-D2 relative to C12, and D1-D2 relative to C13, as shown in the following Table 2 to Table 17, the first row and the first column of each table represent any element of the multi-objective decision-making system; each numerical value in the table represents the importance score obtained after comparison of the corresponding two elements according to Table 1, for example, the numerical value 1 in the third row and the second column in Table 2 below represents the comparison value of the element B2 in the third row and the first column relative to the element B1 in the first row and the second column is 1, that is, the two elements B2 and B1 have the same importance relative to element A.

Wherein, elements Bland B2 represent two influencing factors included in the index layer I, respectively; element A represents the target layer factor; elements C1-C8 represent eight influencing sub-factors in index layer II corresponding to the influencing factor "technology" in the index layer I, respectively; elements C9-C13 respectively represent five influencing sub-factors in index layer II corresponding to the influencing factor "cost" in the index layer I; and elements D1 and D2 represent two wind resource assessment tools (Meteodyn WT and Fluent-RANS) included in the solution layer, respectively.

Table 2 Table of Comparison Matrices of Elements B1 and B2 Relative to A

| A | B1 | B2 |
|---|---|---|
| B1 | 1 | 1 |
| B2 | 1 | 1 |

Table 3 Table of Comparison Matrices of Elements C1-C8 Relative to B1

| B1 | C1 | C2 | C3 | C4 | C5 | C6 | C7 | C8 |
|---|---|---|---|---|---|---|---|---|
| C1 | 1 | 3 | 5 | 3 | 7 | 9 | 7 | 7 |
| C2 | 1/3 | 1 | 3 | 3 | 5 | 7 | 5 | 7 |
| C3 | 1/5 | 1/3 | 1 | 1 | 3 | 5 | 3 | 3 |
| C4 | 1/3 | 1/3 | 1 | 1 | 1 | 3 | 1/3 | 1 |
| C5 | 1/7 | 1/5 | 1/3 | 1 | 1 | 3 | 1/3 | 1/3 |
| C6 | 1/9 | 1/7 | 1/5 | 1/3 | 1/3 | 1 | 1 /3 | 1/3 |
| C7 | 1/7 | 1/5 | 1/3 | 3 | 3 | 3 | 1 | 1 |
| C8 | 1/7 | 1/7 | 1/3 | 1 | 3 | 3 | 1 | 1 |

Table 4 Table of Comparison Matrices of Elements C9-C13 Relative to B2

| B2 | C9 | C10 | C11 | C12 | C13 |
|---|---|---|---|---|---|
| C9 | 1 | 3 | 1/5 | 1/7 | 1/5 |

(continued)

| B2 | C9 | C10 | C11 | C12 | C13 |
|----|-----|-----|-----|-----|-----|
| C10 | 1/3 | 1 | 1/7 | 1/9 | 1/5 |
| C11 | 5 | 7 | 1 | 1/3 | 1 |
| C12 | 7 | 9 | 3 | 1 | 3 |
| C13 | 5 | 5 | 1 | 1/3 | 1 |

Table 5 Table of Comparison Matrices of Elements D1 and D2 Relative to C1

| C1 | D1 | D2 |
|----|----|----|
| D1 | 1 | 1/3 |
| 02 | 3 | 1 |

Table 6 Table of Comparison Matrices of Elements D1 and D2 Relative to C2

| C2 | D1 | D2 |
|----|----|----|
| D1 | 1 | 1/7 |
| 02 | 7 | 1 |

Table 7 Table of Comparison Matrices of Elements D1 and D2 Relative to C3

| C3 | D1 | D2 |
|----|----|----|
| D1 | 1 | 1 |
| D2 | 1 | 1 |

Table 8 Table of Comparison Matrices of Elements D1 and D2 Relative to C4

| C4 | D1 | 02 |
|----|----|----|
| 01 | 1 | 1 |
| 02 | 1 | 1 |

Table 9 Table of Comparison Matrices of Elements D1 and D2 Relative to C5

| C5 | 01 | D2 |
|----|----|----|
| 01 | 1 | 1/3 |
| 02 | 3 | 1 |

Table 10 Table of Comparison Matrices of Elements D1 and D2 Relative to C6

| C6 | D1 | D2 |
|----|----|----|
| D1 | 1 | 1 |
| D2 | 1 | 1 |

Table 11 Table of Comparison Matrices of Elements D1 and D2 Relative to C7

| C7 | D1 | 02 |
|----|----|----|
| D1 | 1 | 1/5 |
| 02 | 5 | 1 |

Table 12 Table of Comparison Matrices of Elements D1 and D2 Relative to C8

| C8 | D1 | D2 |
|----|----|----|
| D1 | 1 | 5 |
| D2 | 1/5 | 1 |

Table 13 Table of Comparison Matrices of Elements D1 and D2 Relative to C9

| C9 | 01 | D2 |
|----|----|----|
| D1 | 1 | 5 |
| D2 | 1/5 | 1 |

Table 14 Table of Comparison Matrices of Elements D1 and D2 Relative to C10

| C10 | D1 | D2 |
|-----|----|----|
| D1 | 1 | 3 |
| D2 | 1/3 | 1 |

Table 15 Table of Comparison Matrices of Elements D1 and D2 Relative to C11

| C11 | D1 | 02 |
|-----|----|----|
| D1 | 1 | 7 |
| 02 | 1/7 | 1 |

Table 16 Table of Comparison Matrices of Elements D1 and D2 Relative to C12

| C12 | D1 | D2 |
|-----|----|----|
| D1 | 1 | 5 |
| D2 | 1/5 | 1 |

Table 17 Table of Comparison Matrices of Elements D1 and D2 Relative to C13

| C13 | D1 | D2 |
|-----|----|----|
| D1 | 1 | 7 |
| D2 | 1/7 | 1 |

Wherein Table 1 represents the third comparison matrix; Tables 3 and 4 represent the second comparison matrix, respectively; Tables 5 to 17 all represent the first comparison matrix; and each matrix element in each comparison matrix is a corresponding different importance score.

The step of verifying each constructed comparison matrix according to predetermined verification conditions includes: acquiring a matrix order of each comparison matrix; comparing the matrix order with a first threshold value; and determining that the corresponding comparison matrix passes the verification if the matrix order is less than or equal to the first threshold value, acquiring a random consistency indicator value corresponding to the comparison matrix from a predetermined data table according to the matrix order if the matrix order is greater than the first threshold value; calculating a maximum eigenvalue of the comparison matrix and calculating a consistency ratio value corresponding to the comparison matrix according to the maximum eigenvalue and the random consistency indicator value; comparing the consistency ratio value with a second threshold value; and determining that the comparison matrix passes the verification if the consistency ratio value is less than the second threshold value, determining that the comparison matrix does not pass the verification if the consistency ratio value is greater than or equal to the second threshold value; adjusting the comparison matrix that does not pass the verification according to the predetermined importance judgment standards, and repeating from the step of acquiring a matrix order of each comparison matrix to the step of adjusting the comparison matrix that does not pass the verification according to the predetermined importance judgment standards until each of the comparison matrices passes the verification.

Specifically, when the matrix order n is less than or equal to 2 (the first threshold value), the consistency test is automatically passed; when the matrix order n is greater than 2, the maximum eigenvalue $\lambda_{max}$ of each comparison matrix is first calculated, and then the consistency index $CI$ is calculated according to the following formula: the consistency index $CI$ can be represented according to the following formula (1):

$$CI = (\lambda_{max} - n)/(n - 1) \quad (1)$$

The corresponding random consistency indicator value $RI$ is then queried according to the matrix order and according to Table 18 below:

Table 18 RI Value Table

| n | 1 | 2 | 3 | 4 | 5 | 6 | 7 | 8 |
|---|---|---|---|---|---|---|---|---|
| RI | 0 | 0 | 0.58 | 0.9 | 1.12 | 1.24 | 1.32 | 1.41 |

Finally, the consistency ratio value is calculated according to the following formula (2):

$$CR = CI/RI \quad (2)$$

If $CR < 0.1$ (the second threshold value), it indicates that the comparison matrix passes the verification; if $CR \geq 0.1$, it indicates that the comparison matrix does not pass the verification. At this time, the comparison matrix is readjusted and constructed according to the judgment standard shown in Table 1, and then verification is carried out again according to the predetermined verification conditions until each of the comparison matrices passes the verification.

In one embodiment, each comparison matrix corresponding to Tables 2 to 17 is verified. Wherein, the matrix order n which is equal to 2 of the comparison matrix corresponding to Tables 2, 5 to 17 automatically passes the verification. The matrix orders of the comparison matrices in Table 3 and Table 4 are respectively 8 and 5 which are both greater than 2. At this time, the maximum eigenvalues corresponding to the comparison matrices in Table 3 and Table 4 are 8.736 and 5.194 respectively; and according to Formula (1), the consistency indexes CI are 0.105 and 0.0485, respectively.

The random consistency indicator values $RI$ of the comparison matrices corresponding to Table 3 and Table 4 obtained according to the matrix order and query according to Table 18 are 1.14 and 1.12, respectively;

The consistency ratio values $CR$ corresponding to the comparison matrices corresponding to Table 3 and Table 4 calculated according to Formula (2) are 0.074 and 0.043, respectively, which both satisfy the condition of $CR < 0.1$, indicating that the comparison matrices corresponding to Table 3 and Table 4 both pass the verification.

Preferably, step S103 further includes: when the verification is passed, a first weight value of each wind resource assessment tool relative to each influencing sub-factor, a second weight value of each influencing sub-factor relative to each influencing factor, and a third weight value of each influencing factor relative to a target wind resource assessment tool are respectively calculated; a first weight matrix is constructed according to each of the second weight values and each of the third weight values, wherein each matrix element in the first weight matrix is composed of each of the second weight values and each of the third weight values; a second weight matrix is constructed according to each of the first weight values, wherein each matrix element in the second weight matrix is composed of each of the first weight values; a result matrix is determined according to the first weight matrix and the second weight matrix; a competitiveness score of each wind resource assessment tool is determined according to the result matrix, wherein each matrix element in the result matrix reflects the competitiveness score of each wind resource assessment tool.

Specifically, when the comparison matrix passes the verification, the weight of each element in the multi-objective decision-making system relative to the element of the previous layer is calculated, i.e., the first weight value of each wind resource assessment tool relative to each influencing sub-factor, the second weight value of each influencing sub-factor relative to each influencing factor, and the third weight value of each influencing factor relative to the target wind resource assessment tool are calculated, and the corresponding weight matrices are constructed according to the calculated different weight values.

First, a new matrix is generated according to the following formula (3):

$$p_{i,j} = \frac{a_{i,j}}{\sum_{i=1}^{n} a_{i,j}} \quad (3)$$

In the formula, $a_{i,j}$ represents the matrix elements in the comparison matrix, $i$ represents the number of rows, $j$ represents the number of columns, and $p_{i,j}$ represents the matrix elements in the new matrix;

secondly, the weight of each element in the multi-objective decision-making system relative to the element of the previous layer is calculated according to the following formula (4):

$$w_{i-U} = \frac{\sum_{j=1}^{n} p_{i,j}}{\sum_{i=1}^{n} \left( \sum_{j=1}^{n} p_{i,j} \right)} \quad (4)$$

In the formula, $w_{i-U}$ represents the weight of the $i$ -th element relative to the element $U$ of the previous layer;

Then, corresponding weight matrices $W_{BC}$ (the first weight matrix) and $W_D$ (the second weight matrix) are generated according to the calculated weight results:

$$W_{BC} = \begin{bmatrix} w_{C1-B1} \cdot w_{B1-A} \\ w_{C2-B1} \cdot w_{B1-A} \\ w_{C3-B1} \cdot w_{B1-A} \\ w_{C4-B1} \cdot w_{B1-A} \\ w_{C5-B1} \cdot w_{B1-A} \\ w_{C6-B1} \cdot w_{B1-A} \\ w_{C7-B1} \cdot w_{B1-A} \\ w_{C8-B1} \cdot w_{B1-A} \\ w_{C9-B2} \cdot w_{B2-A} \\ w_{C10-B2} \cdot w_{B2-A} \\ w_{C11-B2} \cdot w_{B2-A} \\ w_{C12-B2} \cdot w_{B2-A} \\ w_{C13-B2} \cdot w_{B2-A} \end{bmatrix} \quad W_D = \begin{bmatrix} w_{D1-C1} & w_{D2-C1} & w_{D3-C1} & w_{D4-C1} & w_{D5-C1} & w_{D6-C1} \\ w_{D1-C2} & w_{D2-C2} & w_{D3-C2} & w_{D4-C2} & w_{D5-C2} & w_{D6-C2} \\ w_{D1-C3} & w_{D2-C3} & w_{D3-C3} & w_{D4-C3} & w_{D5-C3} & w_{D6-C3} \\ w_{D1-C4} & w_{D2-C4} & w_{D3-C4} & w_{D4-C4} & w_{D5-C4} & w_{D6-C4} \\ w_{D1-C5} & w_{D2-C5} & w_{D3-C5} & w_{D4-C5} & w_{D5-C5} & w_{D6-C5} \\ w_{D1-C6} & w_{D2-C6} & w_{D3-C6} & w_{D4-C6} & w_{D5-C6} & w_{D6-C6} \\ w_{D1-C7} & w_{D2-C7} & w_{D3-C7} & w_{D4-C7} & w_{D5-C7} & w_{D6-C7} \\ w_{D1-C8} & w_{D2-C8} & w_{D3-C8} & w_{D4-C8} & w_{D5-C8} & w_{D6-C8} \\ w_{D1-C9} & w_{D2-C9} & w_{D3-C9} & w_{D4-C9} & w_{D5-C9} & w_{D6-C9} \\ w_{D1-C10} & w_{D2-C10} & w_{D3-C10} & w_{D4-C10} & w_{D5-C10} & w_{D6-C10} \\ w_{D1-C11} & w_{D2-C11} & w_{D3-C11} & w_{D4-C11} & w_{D5-C11} & w_{D6-C11} \\ w_{D1-C12} & w_{D2-C12} & w_{D3-C12} & w_{D4-C12} & w_{D5-C12} & w_{D6-C12} \\ w_{D1-C13} & w_{D2-C13} & w_{D3-C13} & w_{D4-C13} & w_{D5-C13} & w_{D6-C13} \end{bmatrix} \quad (5)$$

wherein $w_{C1-B1} \cdots w_{C8-B1} \cdots w_{C9-B2} \cdots w_{C13-B2}$ represents a plurality of second weight values; $w_{B1-A}$, $w_{B2-A}$ respectivly represent the third weight values; and $w_{D1-Ci} \cdots \cdots w_{D6-Ci}$ represents a plurality of first weight values.

Finally, a result matrix is generated according to the following formula (6):

$$R = (W_{BC})^T \times W_D \quad (6)$$

In the formula, $(W_{BC})^T$ represents a transposition matrix of $W_{BC}$, $R$ represents a result matrix, which is a row and m columns of elements, and the corresponding value of each element represents the competitiveness score of the corresponding wind resource assessment tool. The larger the value is, the stronger the competitiveness of the wind resources assessment tool is, and the wind resource assessment tool with the strongest competitiveness, i.e., the highest competitiveness score, is selected as the target wind resources assessment tool.

In one embodiment, for the comparison matrix corresponding to Table 2, a new matrix can be calculated according to Formula (3), as shown in Table 19 below:

Table 19 A New Matrix Table of B1, B2 Relative to A after Transformation of Comparison Matrix

| A | B1 | B2 |
|---|---|---|
| B1 | 0. 5 | 0.5 |
| B2 | 0.5 | 0.5 |

For the comparison matrix corresponding to Table 3, a new matrix can be calculated according to Formula (3), as shown in Table 20 below:

Table 20 A New Matrix Table of C1-C8 Relative to B1 after Transformation of Comparison Matrix

| B1 | C1 | C2 | C3 | C4 | C5 | C6 | C7 | C8 |
|---|---|---|---|---|---|---|---|---|
| C1 | 0. 4156 | 0. 5605 | 0. 4464 | 0. 2250 | 0.3000 | 0.2647 | 0. 3889 | 0. 3387 |
| C2 | 0. 1385 | 0. 1868 | 0. 2679 | 0. 2250 | 0. 2143 | 0. 2059 | 0. 2778 | 0.3387 |
| C3 | 0. 0831 | 0. 0623 | 0. 0893 | 0. 0750 | 0. 1296 | 0. 1471 | 0. 1667 | 0.1452 |
| C4 | 0. 1385 | 0. 0623 | 0.0893 | 0.0750 | 0. 0429 | 0.0882 | 0. 0185 . | 0.0484 |
| C5 | 0.0594 | 0. 0374 | 0.0298 | 0. 0750 | 0. 0429 | 0. 0882 | 0.0185 | 0. 0161 |
| C6 | 0. 0462 | 0. 0267 | 0.0179 | 0.0250 | 0. 0143 | 0. 0294 | 0.0185 | 0.0161 |
| C7 | 0,0594 | 0. 0374 | 0.0298 | 0. 2250 | 0. 1286 | 0. 0882 | 0. 0556 | 0.0484 |
| C8 | 0. 0594 | 0. 0267 | 0.0298 | 0.0750 | 0. 1286 | 0. 0882 | 0. 0556 | 0.0484 |

Then the new matrix table corresponding to Table 19 can be calculated according to Formula (4):

$$w_{B1-A} = 0.5$$

$$w_{B2-A} = 0.5$$

For the new matrix table corresponding to Table 20, the following can be calculated according to Formula (4):

$$w_{C1-B1} = 0.3675 \quad w_{C2-B1} = 0.2319 \quad w_{C3-B1} = 0.1121$$

$$w_{C4-B1} = 0.0704 \quad w_{C5-B1} = 0.0459 \quad w_{C6-B1} = 0.0243$$

$$w_{C7-B1} = 0.0840 \quad w_{C8-B1} = 0.0639$$

Similarly, each value of $W_{C9\text{-}B2} \cdots W_{C13\text{-}B2}$, $W_{D1\text{-}Ci} \cdots W_{D6\text{-}Ci}$ can be calculated and the corresponding weight matrix $W_{BC}$ and $W_D$ can be generated according to Formula (5):

$$W_{BC} = \begin{bmatrix} 0.184 \\ 0.116 \\ 0.056 \\ 0.035 \\ 0.023 \\ 0.012 \\ 0.042 \\ 0.032 \\ 0.032 \\ 0.018 \\ 0.110 \\ 0.238 \\ 0.102 \end{bmatrix} \qquad W_D = \begin{bmatrix} 0.250 & 0.750 \\ 0.125 & 0.875 \\ 0.500 & 0.500 \\ 0.500 & 0.500 \\ 0.250 & 0.750 \\ 0.500 & 0.500 \\ 0.167 & 0.833 \\ 0.833 & 0.167 \\ 0.833 & 0.167 \\ 0.750 & 0.250 \\ 0.875 & 0.125 \\ 0.833 & 0.167 \\ 0.875 & 0.125 \end{bmatrix}$$

Finally, the following can be calculated according to Formula (6):

$$R = \begin{bmatrix} 0.575 & 0.425 \end{bmatrix}$$

According to the result matrix $R$, the competitiveness scores of the wind resource assessment tools Meteodyn WT and Fluent-RANS are 0.575 and 0.425, respectively. By comparing 0.575 > 0.425, according to the principle of selecting a high competitive score, it is determined that the competitiveness of the wind resource assessment tool Meteodyn WT is stronger than that of Fluent-RANS, so the wind resource assessment tool Meteodyn WT is selected as a target wind resource assessment tool.

As an optional implementation of the embodiment of the present invention, after determining the target wind resource assessment tool, the target wind resource assessment tool can be used to assess the wind resource project to be assessed of the target wind farm, and then the wind resource situation of the target wind farm can be obtained.

In one embodiment, the wind resource assessment of the corresponding wind farm is performed using the selected more competitive wind resource assessment tool Meteodyn WT.

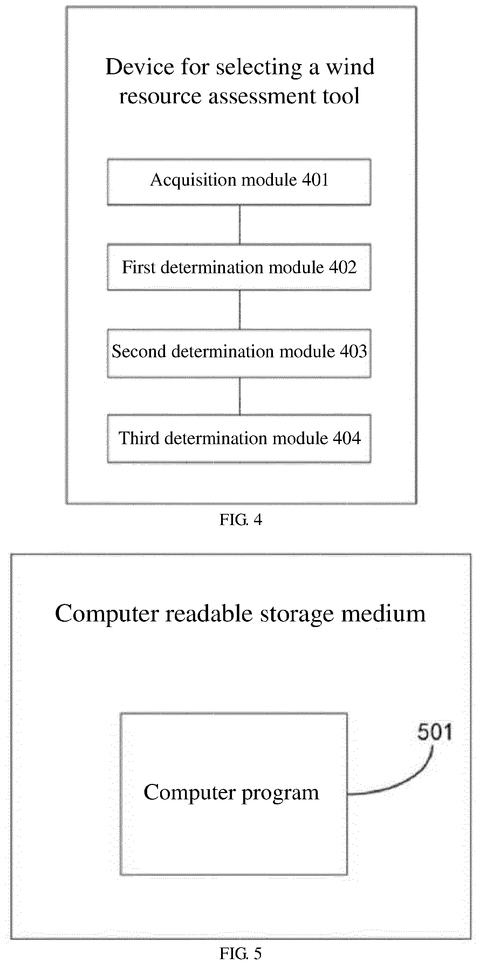

The embodiment of the present invention also provides a device for selecting a wind resource assessment tool. As shown in Fig. 4, the device includes:

an acquisition module 401, configured to acquire at least one wind resource assessment tool; wherein for details, please refer to the related description of step S101 in the above method embodiment,

a first determination module 402, configured to determine at least one influencing factor corresponding to each of the wind resource assessment tools, wherein the influencing factor reflects the influence on the competitiveness of the wind resource assessment tools; and for details, please refer to related description of step S102 in the above method embodiment,

a second determination module 403, configured to determine a competitiveness score of each wind resource assessment tool according to the at least one influencing factor of the wind resource assessment tool; and for details, please refer to the related description of step S103 in the above method embodiment, and

a third determination module 404, configured to determine a target wind resource assessment tool in at least one wind resource assessment tool according to each of the competitiveness scores, wherein the competitiveness score of the target wind resource assessment tool is the highest among all the competitiveness scores; and for details, please refer to the related description of step S104 in the above method embodiment.

Through the device for selecting a wind resource assessment tool provided by the embodiment of the present invention, the competitiveness score of the corresponding assessment tool is determined according to the influencing factors of the wind resource assessment tool, and the optimal tool for assessing the wind resource is determined among a plurality of selectable assessment tools according to the competitiveness score, thereby making clear multi-objective decision-making process, and effectively improving the rationality in selecting the wind resource assessment tool.

As an optional implementation of the embodiment of the present invention, the acquisition module includes: a first acquisition sub-module, configured to acquire a wind resource project to be assessed of a target wind farm; and a second acquisition sub-module, configured to acquire at least one wind resource assessment tool according to the wind resource project to be assessed of the target wind farm.

As an optional implementation of the present embodiment of the present invention, each influencing factor includes a plurality of influencing sub-factors; the second determination module includes: a first determination sub-module, configured to respectively determine a first importance score of each wind resource assessment tool relative to each influencing sub-factor, a second importance score of each influencing sub-factor relative to each influencing factor, and a third importance score of each influencing factor relative to the target wind resource assessment tool according to predetermined importance judgment standards; a first constructing sub-module, configured to respectively construct a plurality of corresponding comparison matrices according to a plurality of the first importance scores, a plurality of the second importance scores and a plurality of the third importance scores, wherein the matrix element in each comparison matrix is composed of a corresponding importance score; a first verification sub-module, configured to verify each comparison matrix according to predetermined verification conditions; a first calculating sub-module, configured to separately calculate a first weight value of each wind resource assessment tool relative to each influencing sub-factor, a second weight value of each influencing sub-factor relative to each influencing factor, and a third weight value of each influencing factor relative to a target wind resource assessment tool when the verification is passed; a second constructing sub-module, configured to construct a first weight matrix according to each of the second weight values and each of the third weight values, wherein each matrix element in the first weight matrix is composed of each of the second weight values and each of the third weight values; a third constructing sub-module, configured to construct a second weight matrix according to each of the first weight values, wherein each matrix element in the second weight matrix is composed of each of the first weight values; a second determination sub-module, configured to determine a result matrix according to the first weight matrix and the second weight matrix; and a third determination sub-module, configured to determine the competitiveness score of each wind resource assessment tool according to the result matrix, wherein each matrix element in the result matrix reflects the competitiveness score of each wind resource assessment tool.

As an optional implementation of the embodiment of the present invention, the first constructing sub-module includes: a fourth constructing sub-module, configured to construct a plurality of first comparison matrices according to the plurality of first importance scores, wherein the first importance scores characterize matrix elements in the first comparison matrix; a fifth constructing sub-module, configured to construct a plurality of second comparison matrices according to the plurality of second importance scores, wherein the second importance scores characterize matrix elements in the second comparison matrix; and a sixth constructing sub-module, configured to construct a plurality of third comparison matrices according to the plurality of third importance scores, wherein the third importance scores characterize matrix elements in the third comparison matrix.

As an optional implementation of the embodiment of the present invention, the first verification sub-module includes: a third acquisition sub-module, configured to acquire the matrix order of each comparison matrix; a first comparison sub-module, configured to compare the matrix order with the first threshold value; and a fourth determination sub-module, configured to determine that the corresponding comparison matrix passes the verification if the matrix order is less than or equal to the first threshold value.

As an optional implementation of the embodiment of the present invention, the first verification sub-module further includes: a fourth acquisition sub-module, configured to acquire a random consistency indicator value corresponding to the comparison matrix in a predetermined data table according to the matrix order if the matrix order is greater than the first threshold value; a second calculating sub-module, configured to calculate the maximum eigenvalue of the comparison matrix and calculate the consistency ratio value corresponding to the comparison matrix according to the maximum eigenvalue and the random consistency indicator value; a second comparison sub-module, configured to compare the consistency ratio value with the second threshold value; and a fifth determination sub-module, configured to determine that the comparison matrix passes the verification if the consistency ratio value is less than the second threshold value.

As an optional implementation of an embodiment of the present invention, the first verification sub-module further includes: a sixth determination sub-module, configured to determine that the comparison matrix does not pass the verification if the consistency ratio value is greater than or equal to the second threshold value; a first repeating sub-module, configured to adjust the comparison matrices that do not pass the verification according to the predetermined importance judgment standards, repeat from the step of acquiring a matrix order of each comparison matrix to the step of adjusting the comparison matrix that does not pass the verification according to the predetermined importance judgment standards until each of the comparison matrices passes the verification.

As an optional implementation of the embodiment of the present invention, the device further includes: an assessment module, configured to assess the wind resource project to be assessed of the target wind farm by using the target wind resource assessment tool to obtain the wind resource situation of the target wind farm.

For the functional description of the device for selecting the wind resource assessment tool provided by the embodiment of the present invention, please refer to the description of the method for selecting the wind resource assessment tool in the above embodiment in details.

The embodiment of the present invention also provides a storage medium, as shown in Fig. 5, a computer program 501 is stored on the storage medium. When the instruction is executed by a processor, the step of implementing the method for selecting a wind resource assessment tool in the above embodiment is provided. The storage medium also stores audio and video stream data, characteristic frame data, interactive request signaling, encryption data, preset data size and the like. Among them, the storage medium can be a magnetic disk, an optical disk, a read only memory (ROM), a random access memory (RAM), a Flash Memory, a hard disk (HDD) or a solid state drive (SSD), etc.; and the storage medium may also include a combination of the above-mentioned types of memories.

It will be understood by those skilled in the art that all or part of the flow of the method in the above embodiment may be implemented by instructing related hardware through a computer program. The program may be stored in a computer readable storage medium and when the program is executed, the program may include the flow of the embodiments of the above-described methods. Wherein, the storage medium may be a magnetic disc, a read-only memory (ROM), a random access memory (RAM), a flash memory, a hard disk drive (HDD), a solid-state drive (SSD), etc.; and the storage medium may also include a combination of the above types of memories.

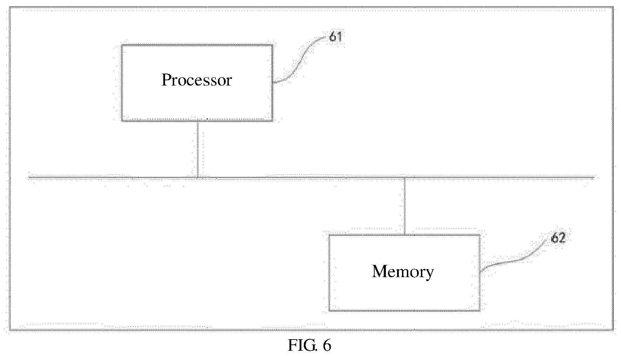

Embodiments of the present invention also provide an electronic device as shown in Fig. 6, and the electronic device may include a processor 61 and a memory 62, wherein the processor 61 and the memory 62 may be connected via a bus or via other manners, and connection via a bus is taken as an example in Fig. 6.

The processor 61 may be a central processing unit (CPU). The processor 61 may also be a chip such as other general-purpose processors, a digital signal processor (DSP), an application specific integrated circuit (ASIC), a field-programmable gate array (FPGA), or other programmable logic devices, discrete gates or transistor logic devices, discrete hardware components, or a combination of the above chips.

The memory 62 may be used as a non-transient computer readable storage medium to store non-transient software programs, non-transient computer executable programs and modules, such as corresponding program instructions/modules in the embodiments of the present invention. The processor 61 executes various functional applications and data processing of the processor by operating the non-transient software program, instructions and modules stored in the memory 62, i.e., achieving the method for selecting the wind resource assessment tool in the above-described method embodiment.

The memory 62 may include a stored program area and a stored data area, wherein the stored program area may store an application program required to operate at least one function of the device; the stored data area may store data created by the processor 61 or the like. In addition, the memory 62 may include a high-speed random access memory and may also include a non-transient memory, such as at least one disk memory device, flash memory device or other non-transient solid-state memory device. In some embodiments, the memory 62 optionally includes a memory remotely disposed relative to the processor 61, and these remote memories may be connected to the processor 61 through a network. Examples of the above networks include, but are not limited to, the Internet, an intranet, a local area network, a mobile communication network and combinations thereof.

The one or more modules are stored in the memory 62, when being executed by the processor 61, the one or more modules perform the method for selecting a wind resource assessment tool as shown in the embodiment in Fig. 1-3.

Specific details of the above-mentioned electronic device can be understood by referring to corresponding related descriptions and effects in the embodiments shown in Figs. 1 to 3, and will not be repeated redundantly herein.

Although embodiments of the present invention are described in combination with the accompanying drawings, various modifications and variations may be made by those skilled in the art without departing from the spirit and scope of the present invention, and such modifications and variations fall within the scope defined by the appended claims.

## Claims

1. A method for selecting a wind resource assessment tool, **characterized in that** the method comprises:

acquiring at least one wind resource assessment tool;
determining at least one influencing factor corresponding to each of the wind resource assessment tools, wherein the influencing factor reflects an influence on competitiveness of the wind resource assessment tool;
determining a competitiveness score of each of the wind resource assessment tools according to the at least one influencing factor of each wind resource assessment tool, wherein each influencing factor comprises a plurality of influencing sub-factors, comprising:

determining a first importance score of each of the wind resource assessment tools relative to each influencing sub-factor, a second importance score of each of the influencing sub-factors relative to each of the influencing factors, and a third importance score of each of the influencing factors relative to a target wind resource assessment tool to be determined, respectively, according to predetermined importance judgment standards;

constructing a plurality of corresponding comparison matrices according to a plurality of the first importance scores, a plurality of the second importance scores, and a plurality of the third importance scores, respectively, with the matrix elements in each comparison matrix being composed of corresponding importance scores;

verifying each comparison matrix according to predetermined verification conditions;

when the verification is passed, calculating respectively a first weight value of each of the wind resource assessment tools relative to each of the influencing sub-factors, a second weight value of each of the influencing sub-factors relative to each of the influencing factors, and a third weight value of each of the influencing factors relative to the target wind resource assessment tool to be determined;

constructing a first weight matrix according to each of the second weight values and each of the third weight values, wherein each matrix element in the first weight matrix is composed of each of the second weight values and each of the third weight values;

constructing a second weight matrix according to each of the first weight values, wherein each matrix element in the second weight matrix is composed of each of the first weight values;

determining a result matrix according to the first weight matrix and the second weight matrix; and

determining a competitiveness score of each of the wind resource assessment tools according to the result matrix, wherein each matrix element in the result matrix reflects the competitiveness score of each of the wind resource assessment tools;

determining a target wind resource assessment tool from the at least one wind resource assessment tool according to each of the competitiveness scores, wherein the competitiveness score of the target wind resource assessment tool is the highest among all the competitiveness scores.

2. The method of claim 1, **characterized in that** the step of acquiring at least one wind resource assessment tool comprises:

acquiring a wind resource project to be assessed of a target wind farm; and
acquiring at least one wind resource assessment tool according to the wind resource project to be assessed of the target wind farm.

3. The method of claim 1, **characterized in that** the step of constructing a plurality of corresponding comparison matrices according to a plurality of the first importance scores, a plurality of the second importance scores, and a plurality of the third importance scores, respectively, with the matrix elements in each comparison matrix being composed of corresponding importance scores, comprises:

constructing a plurality of first comparison matrices according to a plurality of the first importance scores, wherein the first importance scores characterize matrix elements in the first comparison matrix;
constructing a plurality of second comparison matrices according to a plurality of the second importance scores, wherein the second importance scores characterize the matrix elements in the second comparison matrix; and
constructing a plurality of third comparison matrices according to a plurality of the third importance scores, wherein the third importance scores characterize the matrix elements in the third comparison matrix.

4. The method of claim 1, **characterized in that** the step of verifying each comparison matrix according to predetermined verification conditions comprises:

acquiring a matrix order of each comparison matrix;
comparing the matrix order with a first threshold value; and
determining that the corresponding comparison matrix passes the verification if the matrix order is less than or equal to the first threshold value.

5. The method of claim 4, **characterized in that** the step of verifying each comparison matrix according to predetermined verification conditions further comprises:

acquiring a random consistency indicator value corresponding to the comparison matrix from a predetermined data table according to the matrix order if the matrix order is greater than the first threshold value;
calculating a maximum eigenvalue of the comparison matrix, and calculating a consistency ratio value corresponding to the comparison matrix according to the maximum eigenvalue and the random consistency indicator value;
comparing the consistency ratio value with a second threshold value; and
determining that the comparison matrix passes the verification if the consistency ratio value is less than the second threshold value.

6. The method of claim 5, **characterized in that** the step of verifying each comparison matrix according to predetermined verification conditions further comprises:
determining that the comparison matrix does not pass the verification if the consistency ratio value is greater than or equal to the second threshold value; adjusting the comparison matrix that does not pass the verification according to the predetermined importance judgment standards, and repeating from the step of acquiring a matrix order of each comparison matrix to the step of adjusting the comparison matrix that does not pass the verification according to the predetermined importance judgment standards until each of the comparison matrices passes the verification.

7. The method of claim 2, **characterized in that** after determining a target wind resource assessment tool from the at least one wind resource assessment tool according to each of the competitiveness scores, the method further comprises:
using the target wind resource assessment tool to assess the wind resource project to be assessed of the target wind farm, to obtain wind resource situations of the target wind farm.

8. A device for selecting a wind resource assessment tool, **characterized by** comprising:

an acquisition module, configured to acquire at least one wind resource assessment tool;
a first determination module, configured to determine at least one influencing factor corresponding to each of the wind resource assessment tools, wherein the influencing factor reflects an influence on competitiveness of the wind resource assessment tool;
a second determination module, configured to determine a competitiveness score of each of the wind resource assessment tools according to the at least one influencing factor of each wind resource assessment tool, wherein each influencing factor comprises a plurality of influencing sub-factors, comprising:

determining a first importance score of each of the wind resource assessment tools relative to each influencing sub-factor, a second importance score of each influencing sub-factor relative to each of the influencing factors, and a third importance score of each of the influencing factors relative to a target wind resource assessment tool to be determined, respectively, according to predetermined importance judgment standards;
constructing a plurality of corresponding comparison matrices according to a plurality of the first importance scores, a plurality of the second importance scores, and a plurality of the third importance scores, respectively, with the matrix elements in each comparison matrix being composed of corresponding importance scores;
verifying each comparison matrix according to predetermined verification conditions;
when the verification is passed, calculating respectively a first weight value of each of the wind resource assessment tools relative to each of the influencing sub-factors, a second weight value of each of the influencing sub-factors relative to each of the influencing factors, and a third weight value of each of the influencing factors relative to the target wind resource assessment tool to be determined;
constructing a first weight matrix according to each of the second weight values and each of the third weight values, wherein each matrix element in the first weight matrix is composed of each of the second weight values and each of the third weight values;
constructing a second weight matrix according to each of the first weight values, wherein each matrix element in the second weight matrix is composed of each of the first weight values;
determining a result matrix according to the first weight matrix and the second weight matrix; and
determining a competitiveness score of each of the wind resource assessment tools according to the result matrix, wherein each matrix element in the result matrix reflects the competitiveness score of each of the wind resource assessment tools;

a third determination module, configured to determine a target wind resource assessment tool from the at least one wind resource assessment tool according to each of the competitiveness scores, wherein the competitiveness score of the target wind resource assessment tool is the highest among all the competitiveness scores.

9. A computer readable storage medium, **characterized in that** the computer readable storage medium stores computer instructions, and the computer instructions are configured to enable a computer to perform the method for selecting a wind resource assessment tool of any one of claims 1 to 7.

10. An electronic device, comprising: a memory and a processor, **characterized in that** the memory and the processor are in communication connection with each other, the memory stores computer instructions, and the processor is configured to execute the method for selecting a wind resource assessment tool of any one of claims 1 to 7 by executing the computer instructions.

Acquire at least one wind resource assessment tool — S101

Determine at least one influencing factor corresponding to each of the wind resource assessment tools, wherein the influencing factor reflects an influence on competitiveness of the wind resource assessment tool — S102

Determine a competitiveness score of each of the wind resource assessment tools according to the at least one influencing factor of each wind resource assessment tool — S103

Determine a target wind resource assessment tool from the at least one wind resource assessment tool according to each of the competitiveness scores, wherein the competitiveness score of the target wind resource assessment tool is the highest among all the competitiveness scores — S104

Acquire at least one wind resource assessment tool $\quad$ S101

Determine at least one influencing factor corresponding to each of the wind resource assessment tools, wherein the influencing factor reflects an influence on competitiveness of the wind resource assessment tool $\quad$ S102

Determine a competitiveness score of each of the wind resource assessment tools according to the at least one influencing factor of each wind resource assessment tool $\quad$ S103

Determine a target wind resource assessment tool from the at least one wind resource assessment tool according to each of the competitiveness scores, wherein the competitiveness score of the target wind resource assessment tool is the highest among all the competitiveness scores $\quad$ S104

FIG. 1

FIG. 2

13. post-processing cost

12. calculation cost

11. modeling cost

10. learning cost

9. procurement cost

2. Cost

8. atmospheric stability processing level

7. turbulence processing level

6. unsteady state processing level

5. boundary condition processing quality

4. 3D terrain mesh adaptability

3. mesh division quality

2 air blower wake flow calculating method

1. fluid-mechanics model

1. Technology

Wind resource assessment tool most suitable for the project

2. Fluent-RANS

1. Meteodyn WT

Target layer (A)

Indicator layer I (B)

Indicator layer II (C)

Solution layer (D)

FIG. 3

Device for selecting a wind resource assessment tool

Acquisition module 401

First determination module 402

Second determination module 403

Third determination module 404

FIG. 4

Computer readable storage medium

Computer program

501

FIG. 5

FIG. 6

Europäisches
Patentamt

European
Patent Office

Office européen
des brevets

# EUROPEAN SEARCH REPORT

**Application Number**

EP 22 20 7311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARBER SARAH ET AL: "A New Decision Process for Choosing the Wind Resource Assessment Workflow with the Best Compromise between Accuracy and Costs for a Given Project in Complex Terrain", ENERGIES, vol. 15, no. 3, 2 February 2022 (2022-02-02), page 1110, XP093073546, DOI: 10.3390/en15031110 Retrieved from the Internet: URL:https://mdpi-res.com/d_attachment/energies/energies-15-01110/article_deploy/energies-15-01110-v2.pdf?version=1644387788> [retrieved on 2023-08-15] * abstract * * page 1 – page 10 * ----- | 1-10 | INV. G06Q10/0631 G06Q50/06 |
| X | MORETTI ISABEL CRISTINA ET AL: "Using the analytic hierarchy process for selecting prototypes in the development process of fashion garment products", ACTA SCIENTIARUM. TECHNOLOGY, vol. 39, no. 3, 6 July 2017 (2017-07-06), page 367, XP093073515, ISSN: 1806-2563, DOI: 10.4025/actascitechnol.v39i3.30053 Retrieved from the Internet: URL:http://periodicos.uem.br/ojs/index.php/ActaSciTechnol/article/viewFile/30053/pdf > [retrieved on 2023-08-15] * pages 367,370 – page 373 * ----- | 1-10 | TECHNICAL FIELDS SEARCHED (IPC) G06Q |
| | -/-- | | |

The present search report has been drawn up for all claims

| Place of search | Date of completion of the search | Examiner |
|---|---|---|
| Munich | 17 August 2023 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

**Application Number**

EP 22 20 7311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | San Cristóbal Mateo José Ramón: "Multi Criteria Analysis in the Renewable Energy Industry", 22 February 2014 (2014-02-22), Springer, XP093073911, ISSN: 1865-3529 ISBN: 978-1-4471-6081-6 pages ToC,Ch01-Ch03, Retrieved from the Internet: URL:https://link.springer.com/content/pdf/ 10.1007/978-1-4471-2346-0.pdf> * chapters 2 and 3 * | 1-10 | |
| A | Doumpos Michael ET AL: "Multicriteria Decision Aid and Artificial Intelligence: Links, Theory and Applications", 22 April 2013 (2013-04-22), Wiley-Blackwell, XP093073905, ISBN: 978-1-119-97639-4 pages ToC,Ch01-Ch04,Ch12,Ind, * pages 10,39,53 – page 56 * * pages 92,288 – page 293 * | 1-10 | TECHNICAL FIELDS SEARCHED (IPC) |

The present search report has been drawn up for all claims

| Place of search | Date of completion of the search | Examiner |
|---|---|---|
| Munich | 17 August 2023 | Krafft, Gerald |

page 2 of 2